# FASCICULE DE BREVET EUROPEEN

(11) **EP 2 871 868 B1**
(45) Date de publication et mention de la délivrance du brevet: **02.12.2015**
(21) Numéro de dépôt: 14180852.7
(22) Date de dépôt: 13.08.2014
(51) Int. Cl.: H04W 4/02, H04W 4/20, H04W 64/00, H04W 84/04, H04W 4/14

(54) **Procédé de localisation fine d'un SMS émis depuis un équipement utilisateur mobile dans un réseau de télécommunications mettant en oeuvre des femtocellules en mode ouvert**
Feinlokalisierungsverfahren einer von einem mobilen Benutzergerät in einem Funknetz gesendeten SMS, bei dem Femtozellen im offenen Modus zum Einsatz kommen
Method for fine location of an SMS sent by a mobile user device in a telecommunications network using femtocells in open mode

(30) Priorité: 07.11.2013 FR 1360886
(43) Date de publication de la demande: 13.05.2015
(73) Titulaire: Free Mobile, 75008 Paris (FR)
(72) Inventeur: Bolin, Paquito, 34980 Saint Gély du Fesc (FR)
(74) Mandataire: Dupuis-Latour, Dominique

(56) Documents cités:
- EP-A1- 2 252 114
- US-A1- 2011 053 609

## Description

L'invention concerne les réseaux de télécommunications mobiles mettant en oeuvre des femtocellules.

Les femtocellules sont des relais de téléphonie mobile de très faible puissance et de portée réduite (quelques mètres ou dizaines de mètres tout au plus) avec lesquelles un téléphone mobile (MS, *Mobile Station*) peut se coupler pour passer et recevoir des communications vocales, émettre ou recevoir des messages courts (SMS), échanger des données numériques, etc.

Vue du téléphone mobile, la femtocellule est fonctionnellement équivalente à un relais de macrocellule (station de base BS ou *eNodeB*), avec les mêmes fonctions d'itinérance, de transfert intercellulaire, etc. En particulier, lorsque le téléphone mobile se trouve dans la zone de couverture de la femtocellule, le transfert se fait automatiquement de l'antenne macrocellulaire (du réseau radio extérieur) à celle de la femtocellule. De même, lorsque l'utilisateur quitte la zone de couverture de la femtocellule son téléphone retrouve sans coupure le réseau macrocellulaire.

La spécificité d'une femtocellule est d'être reliée à un équipement terminal fixe de fournisseur d'accès Internet de type *box* (ci-après "boitier" ou "boitier Internet"), comportant un modem d'interfaçage à une liaison IP filaire de type xDSL ou en fibre optique de type FTTH, utilisée pour recevoir et émettre les signaux échangés avec le téléphone mobile couplé à la femtocellule.

Cette technique fait donc intervenir deux opérateurs, à savoir l'opérateur du réseau mobile (MNO) et le fournisseur d'accès Internet (FAI).

L'intérêt d'une communication via des femtocellules est multiple : en premier lieu, cette technique permet de desservir des zones où la couverture radio du réseau macrocellulaire extérieur est médiocre ou très fluctuante, notamment à l'intérieur des habitations du fait de l'effet d'écran des superstructures environnantes ; en second lieu, la charge du réseau radio est fortement réduite, puisque les communications sont acheminées vers le coeur de réseau du MNO par la connexion IP haut débit du réseau filaire ou optique du FAI au lieu de l'être via l'interface radio du réseau du MNO, qui peut se trouver parfois saturé dans les zones de couverture très denses.

Au surplus, la mise en oeuvre des femtocellules est extrêmement simple, dans la mesure où celles-ci n'utilisent que des infrastructures préexistantes, tant au niveau du FAI que du MNO, et peuvent être installées par simple branchement ou enfichage d'un "module femto" sur le boitier du FAI (dans la suite de la description, par simplification, on utilisera simplement le terme "la femtocellule" pour désigner aussi ce module).

Les femtocellules sont habituellement de type "fermé", c'est-à-dire que le détenteur du boitier Internet doit déclarer auprès du MNO les numéros de téléphone mobile autorisés à se connecter à la femtocellule reliée à son boitier, les numéros autorisés étant par exemple identifiés par des clés contenues dans leur carte SIM/USIM, comme l'identifiant d'abonné IMSI. Lorsque le MNO reçoit/émet un appel ou un message en provenance/à destination de l'un de ces numéros, si l'utilisateur n'est pas localisé auprès d'une macrocellule du réseau, le MNO saura *a priori* auprès de quelle(s) femtocellule(s) cet utilisateur est susceptible de s'être couplé. Ce dernier peut être ainsi aisément retrouvé dans le réseau, et aussi géographiquement localisé puisque les femtocellules sont reliées à des boitiers installés à demeure en un emplacement connu (du FAI), à savoir la terminaison de la ligne xDSL ou FTTH utilisée.

L'invention vise, au contraire, la mise en oeuvre d'un réseau de femtocellules de type "ouvert", c'est-à-dire dans lequel n'importe quel abonné du MNO est susceptible de se coupler à une femtocellule à proximité de laquelle il se trouve, sans aucun enregistrement préalable par le détenteur du boitier et de façon transparente par rapport à ce dernier.

À l'inverse d'un réseau fermé où la femtocellule ne sert que les besoins de l'abonné qui l'a installée, sur un réseau ouvert la localisation précise des appels ou des envois de SMS n'est pas possible, qu'ils soient émis depuis un téléphone mobile se trouvant à proximité de cette femtocellule, ou à destination d'un tel téléphone mobile.

En effet, la seule localisation possible en l'absence de mesures particulières serait celle donnée par les "zones de service" (SA, *Service Area*) définies par les spécifications 3GPP. Ces zones de service peuvent regrouper un nombre relativement élevé de cellules en fonction de leur situation géographique et d'un "service" particulier affecté à cette zone : par exemple le secteur d'intervention d'une unité de police, d'une caserne de pompiers, etc. Les spécifications 3GPP ne permettent qu'un nombre limité de telles zones de service par "zone de localisation" (LA, *Location Area*), une zone de localisation pouvant elle-même couvrir une zone très étendue telle qu'un département, une grande ville ou partie d'une grande ville seulement.

De telles techniques de localisation d'un terminal connecté à une femtocellule dans un réseau de type ouvert sont notamment exposées dans les EP 2 252 114 A1 et US 2011/0053609 A1.

À la différence de l'information de géolocalisation (position géographique de l'antenne) dont dispose le MNO dans le cas d'une macrocellule de son réseau, une localisation grossière par zone de localisation/zone de service serait insuffisante, dans la mesure où il ne serait pas possible de connaitre l'adresse précise d'où l'appel ou le message serait émis ou bien où il devrait être acheminé.

Or, cette information doit pouvoir être impérativement fournie par le MNO dans le cadre d'une réquisition officielle par les autorités publiques. Une telle réquisition impose en effet la communication des données contenues dans le "ticket de taxation" ou CDR (*Call Detail Record*) consignant toutes les informations relatives à un appel téléphonique spécifiquement identifié. Ce ticket contient l'identité de l'appelant et de l'appelé, la date et l'heure de l'appel, sa durée, le type d'appel (voix, SMS, etc.) et, dans le cas d'un appel passé via un réseau mobile, la localisation fine de l'appelant et/ou de l'appelé.

Dans le cas d'un réseau macrocellulaire, cette localisation sera une géolocalisation par la latitude et la longitude de l'antenne du relais (BS ou *eNodeB*) du réseau mobile par lequel a transité l'appel.

Dans le cas d'un réseau de femtocellules opérant en réseau fermé, cette localisation sera possible à partir de la déclaration préalable que le détenteur du réseau Internet aura faite auprès du MNO des utilisateurs autorisés à utiliser la femtocellule connectée à son boitier.

En revanche, dans le cas d'une communication passée via une femtocellule en réseau ouvert, cette identification directe n'est pas possible, dès lors que le MNO n'est pas capable d'identifier la femtocellule précisément impliquée dans la communication et ne connait pas sa position géographique, informations qui relèvent de l'ISP qui a fourni le boitier Internet auquel est reliée la femtocellule.

Tel est le problème de l'invention, qui propose un nouveau procédé de localisation du lieu d'émission d'un message court (SMS) envoyé à partir d'un téléphone mobile couplé à une femtocellule opérant en mode ouvert (c'est-à-dire susceptible de recevoir des émissions de SMS en provenance d'un téléphone de n'importe quel abonné du MNO), ce procédé devant pouvoir fournir au MNO :
- non seulement une localisation grossière (code d'identification des zones de service et de localisation SAC et LAC où se trouve l'émetteur du SMS),
- mais également une localisation fine permettant d'identifier le boitier Internet précisément utilisé pour un envoi de SMS, ce boitier étant par exemple identifié par son adresse IP et/ou une information géographique précise telle que le code INSEE (code numérique de la nomenclature officielle des communes françaises) du lieu de situation du boitier, c'est-à-dire du lieu de situation de la terminaison de la ligne filaire ou optique xDSL/FTTH.

Comme on le verra, le procédé de l'invention permet d'obtenir cette localisation fine en toutes circonstances, quel que soit l'abonné du réseau mobile utilisant la femtocellule, et sans que le détenteur du boitier Internet sur lequel est branchée cette femtocellule n'ait à faire aucune déclaration préalable.

Le procédé de localisation de l'invention est ainsi applicable à tout abonné mobile, même simplement "de passage" à proximité de la femtocellule, et d'une façon qui est entièrement transparente aussi bien à cet abonné qu'au détenteur du boitier Internet.

En d'autres termes, l'abonné mobile n'aura même pas connaissance du fait qu'il utilise comme relais une femtocellule proche et non une antenne du réseau macrocellulaire, ni de ce que l'utilisation de cette femtocellule a déclenché une procédure de localisation fine de la femtocellule.

Plus précisément, l'invention propose un procédé de localisation d'un message court SMS issu d'un équipement utilisateur mobile dans un réseau de télécommunications comprenant un réseau mobile de MNO et un réseau fixe de FAI. Ce réseau de télécommunications est du type général énoncé dans le préambule de la revendication 1, connu par exemple des EP 2 252 114 A1 et US 2011/0053609 A1 précités. La partie caractérisante de cette revendication 1 énonce les éléments et étapes propres à la présente invention, permettant d'atteindre les buts précités.

Les sous-revendications visent des mises en oeuvre particulières, avantageuses, de l'invention.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 illustre de façon schématique les différents réseaux impliqués dans la mise en oeuvre d'un appel passé ou reçu par l'intermédiaire d'une femtocellule.
La Figure 2 représente de façon symbolique le regroupement géographique des cellules d'un réseau de télécommunications mobiles en zones de service, elles-mêmes regroupées en un nombre limité de zones de localisation.
La Figure 3 est une représentation schématique des différentes entités du réseau impliquées par la mise en oeuvre du procédé de localisation selon l'invention, montrant les différents messages et données échangés entre ces entités.

On va maintenant décrire un exemple de mise en oeuvre de l'invention. L'invention sera décrite dans le cadre d'un réseau cellulaire de type UMTS tel que défini par les spécifications 3GPP, censées connues de l'homme du métier.

À titre liminaire, on précisera que dans la présente description et sur les dessins seront utilisées des abréviations (SAC, LAC, VMSC, CDR, etc.) et des dénominations (*Location Reporting, Security Gateway,* etc.) faisant référence à des concepts et éléments définis et explicités par ces spécifications 3GPP, et que pour cette raison ces abréviations et dénominations seront conservées telles quelles (en langue anglaise) et ne seront pas décrites en détail plus que nécessaire.

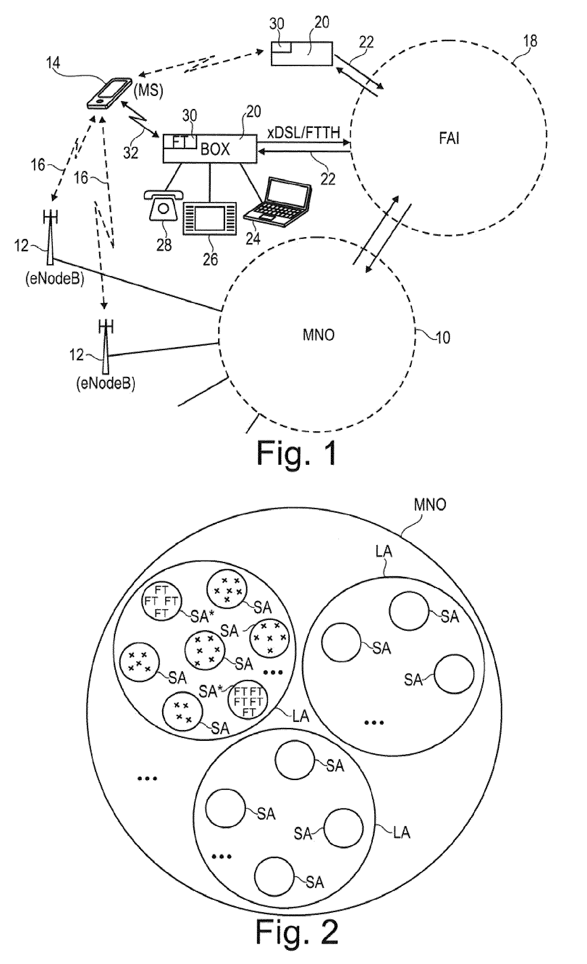

La Figure 1 illustre de façon schématique les différents réseaux impliqués dans la mise en oeuvre d'un appel passé ou reçu par l'intermédiaire d'une femtocellule.

Cet ensemble comprend un coeur de réseau cellulaire de télécommunications mobiles 10 géré par un opérateur de réseau mobile MNO, avec une pluralité d'antennes 12 définissant chacune une macrocellule d'une station de base *eNodeB,* antennes auxquelles l'utilisateur d'un téléphone mobile 14 (MS, *Mobile Station*) peut se coupler par une liaison radio sans fil 16. L'ensemble comprend également un réseau de télécommunications fixe de fournisseur d'accès Internet FAI avec un coeur de réseau de FAI 18 et un ensemble de boitiers Internet fixes 20 (désignés BOX) reliés au coeur de réseau par des liaisons IP fixes 22, qui sont des liaisons filaires de type xDSL ou optiques de type FTTH.

Un exemple de boitier Internet est l'équipement distribué par l'opérateur *Free*, Paris, France sous la dénomination *Freebox Crystal ou Freebox Revolution Server.* Il s'agit d'un boitier d'interfaçage multifonction comportant un modem ADSL/FTTH et mettant en oeuvre des fonctions de téléphonie, réseau IP (par réseau filaire Ethernet ou sans fil Wi-Fi) et télévision.

Le boitier Internet 20 peut être relié de façon classique à un ou plusieurs ordinateurs 24, à un téléviseur 26, à un combiné téléphonique 28, etc. Par ailleurs, ce boitier est susceptible de recevoir un module de type femtocellule 30 (désigné FT) de faible puissance et de portée réduite autorisant un couplage radio sans fil 32 avec un téléphone mobile 14 situé à proximité. Comme expliqué en introduction, la femtocellule 30 constitue une microstation de base fonctionnellement équivalente, du côté du téléphone mobile, à une station de base 12 du réseau macrocellulaire extérieur. La différence réside dans le fait que, côté opérateur, cette femtocellule 30 joue le rôle d'une passerelle vers le réseau IP fixe filaire ou optique du FAI pour permettre l'accès aux services du MNO à partir du réseau fixe Internet haut débit.

La femtocellule est considérée par le MNO comme une cellule à part entière (équivalente à un *eNodeB*) permettant par exemple d'acheminer via le réseau IP un appel vocal vers le réseau commuté.

La Figure 2 représente de façon symbolique le regroupement géographique des cellules d'un réseau de télécommunications mobiles en zones de service, elles-mêmes regroupées en un nombre limité de zones de localisation.

Plus précisément, les cellules du réseau du MNO sont réparties entre plusieurs "zones de localisation" ou LA (*Local Area*) selon la terminologie 3GPP. Chaque LA est généralement mise en oeuvre par un serveur propre, et regroupe l'ensemble des cellules du MNO situées dans une région géographiquement homogène, par exemple un département français ou une grande ville ou un secteur d'une grande ville. Chaque LA est identifiée par un code LAC (*Local Area Code*) unique au sein du réseau.

À l'intérieur de chaque LA les cellules sont elles-mêmes regroupées en "zones de service" ou SA (*Service Area*) selon la terminologie 3GPP, chaque SA étant identifiée par un code SAC (*Service Area Code*) qui lui est propre et qui est unique au sein d'une même LA.

Les SA ont été typiquement conçues, selon les spécifications 3GPP, pour regrouper des cellules affectées à i) un service donné - par exemple un service d'urgence tel que police ou pompiers - ii) situé dans une zone géographiquement homogène - par exemple la zone d'intervention d'une unité de police donnée, ou d'une caserne de pompiers donnée.

De façon caractéristique de l'invention, pour la mise en oeuvre d'un réseau avec femtocellules ouvertes, le concept de zone de service SA prévu par les spécifications 3GPP est utilisé en ajoutant aux SA existantes dans une LA donnée (SA qui correspondent donc aux macrocellules du réseau) des SA additionnelles, dédiées aux femtocellules. Ces SA dédiées, désignées SA* sur la Figure 2, ne contiennent que des identifiants de femtocellules (FT) et regroupent les femtocellules de manière homogène en fonction de leur situation géographique, qui est la situation physique du boitier Internet associé à cette femtocellule.

L'affectation d'une femtocellule à telle ou telle zone de service SA* est opérée une fois pour toutes, lors de l'installation de la femtocellule dans le boitier Internet : lors de cette étape préliminaire, l'identité de la femtocel-Iule est transmise au MNO en même temps que celle du boitier Internet avec sa localisation géographique, et le MNO affecte alors la femtocellule à la zone de service SA* qui lui est géographiquement la plus proche. Une femtocellule donnée pourra ainsi faire l'objet d'une première localisation, grossière, par les codes SAC+LAC qui lui correspondent dans la topologie du réseau.

Cette première localisation est toutefois insuffisante. En particulier, elle ne permet pas de répondre aux exigences des autorités nationales en cas de réquisition officielle exigeant la communication précise du lieu à partir duquel un appel ou un SMS a été émis, ou vers lequel un appel ou un SMS a été acheminé.

En effet, le SAC étant codé sur deux octets, il n'est pas possible d'avoir plus de 65 535 SA par LA. Il n'est donc pas envisageable de prévoir autant de SA que de femtocellules présentes dans le réseau (ce qui aurait résolu le problème de la localisation fine), et les femtocellules doivent être impérativement rassemblées à plusieurs dans un nombre réduit de SA contenant donc chacune un nombre élevé de femtocellules.

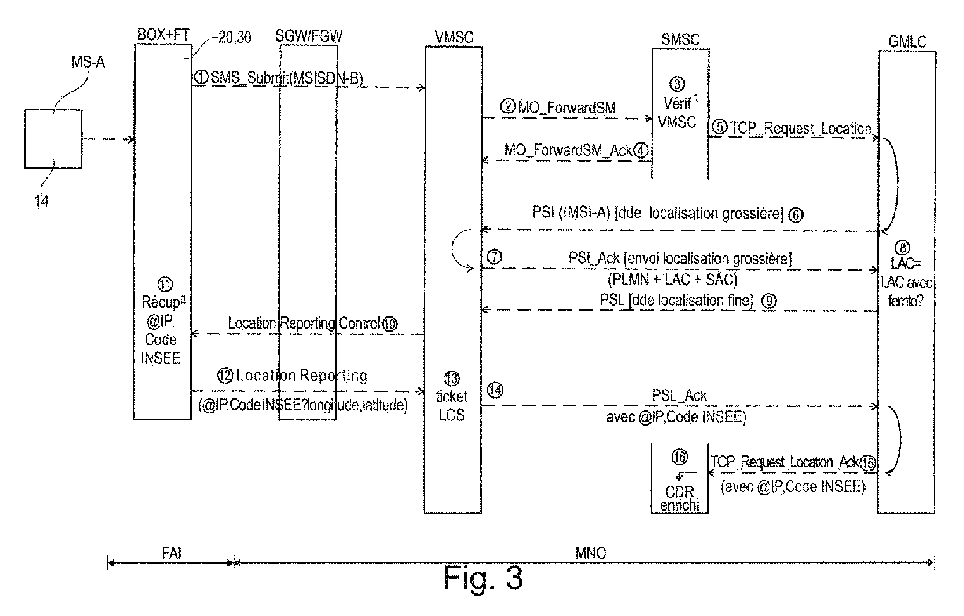

Le procédé de l'invention permet toutefois au réseau mobile de déterminer la localisation fine requise, au moment de l'émission d'un SMS via une femtocellule, de la manière que l'on va maintenant décrire, en référence à la Figure 3.

Sur cette Figure 3, on a représenté les différentes entités impliquées par cette procédure, avec :
- le téléphone mobile MS;
- l'ensemble formé par le boitier Internet BOX et la femtocellule FT reliée à celui-ci ;
- côté MNO :
   - la passerelle *Security Gateway*/*Femto Gateway* SGW/FGW, qui assure l'interfaçage du réseau mobile avec les femtocellules, pour les fonctions d'accès et de sécurité. En particulier, lorsqu'un boitier Internet est réinitialisé, la passerelle SGW reconnait qu'une femtocellule a été installée sur ce boitier Internet et mémorise les caractéristiques de cette femtocellule ;
   - le centre de commutation *Visited Mobile Switching Center* VMSC, qui est l'entité chargée du routage des communications dans le réseau et de l'interconnexion avec les autres réseaux, mobiles ou fixes ;
   - un centre *Short Message Service Center* SMSC, qui assure la centralisation des SMS émis par les abonnés du réseau, leur stockage temporaire et leur distribution aux destinataires du même réseau ou de réseaux gérés par d'autres MNO ;
   - une plateforme *Gateway Mobile Location Center* GMLC, dont la fonction est de recevoir et traiter des requêtes de localisation qui lui sont soumises par le coeur du réseau, notamment en provenance du SMSC, ces requêtes de localisation étant le cas échéant traitées à l'aide d'autres entités du réseau.

Lorsque le téléphone mobile (MS) de l'abonné "A" (MS-A) 14 émet un SMS, ce SMS est adressé au VMSC (étape n° 1) par un message *SMS_Submit* de soumission du SMS, ce message contenant en particulier le numéro du destinataire "B" de ce SMS, identifié par son numéro MSISDN-B.

À ce stade, le VMSC ne dispose que d'une information très grossière de localisation de la femtocellule, dans la mesure où, dans le cas des SMS (et à la différence des appels vocaux), les spécifications normatives ne prévoient pas de transmettre au VMSC les identifiants SAC et LAC (bien que ceux-ci soient connus de la passerelle SGW/FGW).

Le VMSC retransmet (étape n° 2) au SMSC le message de soumission du SMS, avec le même contenu mais sous un protocole différent (message *MO_ForwardSM*). Ce message est analysé par le SMSC (étape n°3), notamment pour vérifier de quelle entité du coeur de réseau (concrètement, de quel VMSC) provient le SMS, car un même opérateur peut disposer de plusieurs VMSC. Un acquittement *MO_ForwardSM_Ack* confirmant la bonne réception du message *MO_ForwardSM* est envoyé en retour au VMSC (étape n ° 4).

Le SMSC ne disposant d'aucune information de localisation sur le SMS qu'il vient de recevoir, il adresse à la plateforme GMLC une demande de localisation (étape n° 5), présentée sous forme d'un message *TCP_Request_Location* contenant notamment :
- l'identifiant MSISDN-B du destinataire,
- l'identifiant IMSI-A de l'émetteur du SMS, et
- l'identité du VMSC par lequel a transité le SMS.

À ce stade, le système ne connait de l'émetteur du SMS que l'identité du VMSC concerné, ce qui ne donne aucune information de localisation véritable, même très grossière car, même quand un MNO gère plusieurs VMSC, ceux-ci ne correspondent pas vraiment à des zones géographiques. Le système ne connait pas non plus les données de zone de localisation et zone de service LA/SA puisque, comme indiqué plus haut, les informations LAC et SAC ne sont pas transmises avec les messages de gestion des SMS.

Pour obtenir ces informations de localisation grossière et fine de la femtocellule, le GMLC va déclencher une procédure de demande de localisation.

La plateforme GMLC adresse à cet effet au VMSC concerné (dont l'identité est indiquée dans le message *TCP_Request_Location*) une demande de localisation grossière (étape n° 6) par un message de type *PSI* (*Provide Subscriber Information)* avec comme paramètre l'identifiant IMSI-A de l'émetteur du SMS.

En réponse, le VMSC adresse en retour à la plateforme GMLC (étape n° 7) un message *PSI_Ack* d'acquittement de la demande PSI, ce message *PSI_Ack* contenant un champ LAI (*Location Area Identity*) contenant l'identifiant PLMN du réseau et les codes LAC et SAC identifiant les zones LA et SA de la femtocellule à partir de laquelle a été émis le SMS. En effet, ces informations LAC et SAC sont connues du VMSC dans la mesure où l'abonné utilisateur du téléphone mobile MS-A s'est nécessairement localisé auprès du réseau lorsqu'il a allumé son appareil et a émis le SMS. Sa dernière position est donc connue de la passerelle SGW/FGW et du VMSC.

À réception du message *PSI_Ack* contenant les données de localisation grossière, la plateforme GMLC teste alors (étape n° 8) si la LAC est ou non une LAC spécifique regroupant des femtocellules.

Dans l'affirmative, la plateforme GMLC adresse (étape n° 9) au VMSC une demande de localisation fine, sous forme d'une requête PSL (*Provide Subscriber Location*).

À réception de cette requête PSL, le VMSC adresse (étape n° 10) à la femtocellule une requête *Location Reporting Control* (selon les spécifications 3GPP), c'est-à-dire une demande de localisation fine de la cellule utilisée.

Sur réception de cette requête, la femtocellule récupère (étape n° 11) :
- l'adresse IP du boitier Internet (qui, par commodité, a été mémorisée une fois pour toutes dans la femtocellule lors de l'initialisation de celle-ci après insertion dans le boitier Internet). Cette adresse IP permet notamment de retrouver si nécessaire l'adresse physique et l'identité de l'abonné du FAI détenteur du boitier Internet ; et
- le code INSEE du lieu où est situé le boitier Internet (et donc la femtocellule). Cette information est connue du FAI puisqu'il sait où se situe la terminaison de la ligne fixe filaire ou optique à laquelle est branché le boitier Internet, et cette information avait été transmise au boitier Internet lors de l'initialisation ou de la réinitialisation de celui-ci.

Ces deux informations, adresse IP et code INSEE, sont transmises au VMSC (étape n° 12) par encapsulation dans un message *Location Reporting* (selon les spécifications 3GPP), en lieu et place des coordonnées géographiques de latitude et longitude de position de l'antenne de la station de base, qui auraient été les informations normalement retransmises dans un message *Location Reporting* conventionnel provenant d'une station *eNodeB* d'une macrocellule.

Cette technique d'encapsulation des informations spécifiques à la femtocellule en lieu et place des informations de géolocalisation conventionnelle d'une antenne du réseau permet d'utiliser, sans modification, les messages et protocoles conventionnels prévus par les spécifications donc sans aucun changement au niveau des couches de gestion des protocoles, de contrôle de conformité, de vérification des paquets, etc., au sein des réseaux impliqués par cette procédure, aussi bien le réseau du FAI que celui du MNO.

Bien entendu, d'autres informations de localisation, connues ou obtenues au sein du boitier Internet ou de la femtocellule, peuvent être utilisées en variante ou en complément de celles indiquées dans le présent exemple (adresse IP et code INSEE).

Sur réception du message *Location Reporting* contenant les données relatives à la femtocellule à l'origine du SMS, le VMSC va transmettre ces données au SMSC.

Cette transmission peut être opérée directement par envoi d'un message spécifique, le VMSC et le SMSC ayant été adaptés de manière à pouvoir gérer ce message spécifique de transmission des informations de localisation fine.

Une autre technique consiste, comme illustré sur la Figure 3, à opérer cette transmission indirectement via la plateforme GMLC, en n'utilisant que des messages et requêtes conformes aux spécifications 3GPP, donc sans aucune adaptation des VMSC et SMSC.

À cet effet, le VMSC génère (étape n° ° 13) un message de type "ticket LCS" (*Location Service*) incorporant les informations de localisation fine (adresse IP + code INSEE) dans un message *PSL*_*Ack* (*Provide Subscriber Location Acknowledgment)* adressé (étape n° 14) à la plateforme GMLC. Ce message constitue une réponse au message *PSL* de demande de localisation fine précédemment émis par le GMLC à l'étape n°9.

Ce message est alors répercuté au SMSC (étape n° 15) sous forme d'un message *TCP_Request_Location_Ack.* Ce message constitue une réponse au message *TCP_Request_Location* de demande initiale de localisation précédemment émis par le SMSC à destination de la plateforme GMLC à l'étape n ° 5.

À partir de ces informations, le SMSC va pouvoir générer (étape n° 16) un "ticket de taxation" ou CDR (*Call Detail Record)* enrichi, incluant notamment :
- numéro de destinataire,
- numéro d'origine,
- horodatage de l'émission du SMS,
- localisation grossière (SAC + LAC) et fine (adresse IP + code INSEE) de la femtocellule à partir de laquelle est émis le SMS.

## Revendications

1. Un procédé de localisation d'un message court SMS issu d'un équipement utilisateur mobile (14 ; MS) dans un réseau de télécommunications comprenant :
- un réseau mobile (10) d'opérateur de réseau mobile (MNO) comprenant :
• un coeur de réseau avec un centre de commutation (VMSC) ;
• un centre de stockage des SMS (SMSC) ; et
• une plateforme de localisation (GMLC), et
- un réseau fixe (18) de fournisseur d'accès Internet (ISP), comprenant un coeur de réseau fixe et une pluralité de boitiers individuels (20 ; BOX) formant équipements de terminaison du réseau fixe, avec pour chacun des données uniques d'identification de boitier,
certains de ces boitiers étant pourvus d'un module émetteur/récepteur cellulaire à courte portée de type femtocellule (30 ; FT) permettant un couplage sans fil temporaire (32) avec un équipement utilisateur mobile (14 ; MS) proche,
procédé dans lequel :
- le réseau mobile est organisé en une pluralité de zones de localisation (LA) identifiées chacune par un code de zone de localisation (LAC) ;
- chaque zone de localisation regroupe un ensemble de zones de service (SA) identifiées chacune par un code de zone de service (SAC), chaque zone de service regroupant un ensemble géographiquement homogène de cellules du réseau mobile ;
- les femtocellules opèrent en mode ouvert, chaque femtocellule du réseau mobile étant apte à se coupler à tout équipement utilisateur (MS) enregistré auprès de l'opérateur de réseau mobile (MNO) et se trouvant à proximité de la femtocellule, sans que cet équipement utilisateur n'ait été au préalable enregistré auprès du boitier individuel ; et
- l'émission d'un SMS à partir d'un équipement utilisateur (MS) couplé à une femtocellule (FT) déclenche une séquence comprenant les étapes suivantes :
a) envoi par le centre de stockage des SMS (SMSC) à la plateforme de localisation (GMLC) d'une demande de localisation de l'équipement utilisateur ;
b) envoi par la plateforme de localisation (GMLC) au centre de commutation (VMSC) d'une demande de localisation grossière ; et
c) envoi par le centre de commutation (VMSC) à la plateforme de localisation (GMLC) d'une localisation grossière comprenant les codes de zone de service (SAC) et de zone de localisation (LAC) correspondant à la femtocellule ;
ce procédé étant **caractérisé en ce que** :
- au moins l'une des zones de localisation (LA) comprend des zones de service additionnelles spécifiques (SA*) dans lesquelles sont regroupés des identifiants de femtocellules ; et
- ladite séquence d'étapes comprend en outre les étapes ultérieures suivantes :
d) détermination par la plateforme de localisation (GMLC) si la zone de localisation (LA) correspond ou non à l'une desdites zones de service additionnelles spécifiques (SA*) dans lesquelles sont regroupés des identifiants de femtocellules ;
e) dans l'affirmative, envoi par la plateforme de localisation (GMLC) à la femtocellule, via le centre de commutation (VMSC), d'un message de demande de localisation fine ;
f) obtention par le centre de commutation (VMSC) auprès de la femtocellule d'une localisation fine comprenant des données uniques d'identification du boitier associé à la femtocellule ; et
g) transmission par le centre de commutation (VMSC) de la localisation fine au centre de stockage des SMS (SMSC).

2. Le procédé de la revendication 1, dans lequel la séquence comprend en outre l'étape finale suivante :
h) par le centre de stockage des SMS (SMSC), génération d'un ticket de données SMS (CDR) supplémenté par les données uniques d'identification du boitier.

3. Le procédé de la revendication 2, dans lequel l'étape g) de transmission par le centre de commutation (VMSC) de la localisation fine au centre de stockage des SMS (SMSC) est une étape de transmission indirecte comprenant les sous-étapes suivantes :
g1) envoi par le centre de commutation (VMSC) à la plateforme de localisation (GMLC) d'une réponse à ladite demande de localisation d'abonné, cette réponse incorporant ladite localisation fine ; et
g2) transmission par la plateforme de localisation (GMLC) au centre de stockage des SMS (SMSC) d'une réponse à ladite demande de localisation d'abonné, cette réponse incorporant ladite localisation fine.

4. Le procédé de la revendication 3, dans lequel ladite réponse à la demande de localisation d'abonné est un message *PSL_Ack* selon les spécifications 3GPP.

5. Le procédé de la revendication 1, dans lequel les données uniques d'identification du boitier comprennent l'adresse IP associée au boitier (@IP) et un code géographique (Code INSEE) du lieu de situation du boitier.

6. Le procédé de la revendication 1, dans lequel le message de demande de localisation fine est un message *Location Reporting Control* selon les spécifications 3GPP et le message en réponse est un message *Location Reporting* selon les spécifications 3GPP.

7. Le procédé de la revendication 6, dans lequel les données uniques d'identification de boitier sont encapsulées dans le message *Location Reporting* par substitution de ces données aux coordonnées géographiques de longitude/latitude.

## Patentansprüche

1. Verfahren zur Lokalisierung einer SMS-Kurzmitteilung aus einer Mobilfunkteilnehmer-Ausrüstung (14; MS), in einem Telekommunikationsnetz, das enthält:
- ein Mobilfunknetz (10) eines Mobilfunknetzbetreibers (MNO), das enthält:
• ein Kernnetz mit einer Vermittlungsstelle (VMSC);
• eine Speicherstelle der SMS (SMSC); und
• eine Lokalisierungsplattform (GMLC), und
- ein Festnetz (18) eines Internetzugangsanbieters (ISP), das ein Festnetz-Kernnetz und eine Vielzahl individueller Boxen (20; BOX) enthält, die Endausrüstungen des Festnetzes formen, mit für jede eindeutigen Boxidentifikationsdaten, wobei bestimmte dieser Boxen mit einem zellularen Nahbereich-Sender-/Empfänger-Modul von der Art Femtozelle (30; FT) ausgestattet sind, das eine vorübergehende drahtlose Verbindung (32) mit einer nahen Mobilfunkteilnehmer-Ausrüstung (14; MS) erlaubt,
Verfahren, bei dem:
- das Mobilfunknetz in einer Vielzahl von Lokalisierungszonen (LA) organisiert ist, die je durch einen Lokalisierungszonencode (LAC) identifiziert werden;
- jede Lokalisierungszone eine Einheit von Dienstzonen (SA) zusammenfasst, die je von einem Dienstzonencode (SAC) identifiziert werden, wobei jede Dienstzone eine geographisch homogene Einheit von Zellen des Mobilfunknetzes zusammenfasst;
- die Femtozellen im offenen Modus arbeiten, wobei jede Femtozelle des Mobilfunknetzes sich mit jeder Benutzerausrüstung (MS) verbinden kann, die beim Mobilfunknetzbetreiber (MNO) gespeichert ist und sich in der Nähe der Femtozelle befindet, ohne dass diese Benutzerausrüstung vorher in der individuellen Box gespeichert wurde; und
- die Sendung einer SMS von einer mit einer Femtozelle (FT) verbundenen Benutzerausrüstung (MS) eine Sequenz auslöst, die die folgenden Schritte enthält:
a)Senden einer Lokalisierungsanforderung der Benutzerausrüstung durch die Speicherstelle der SMS (SMSC) an die Lokalisierungsplattform (GMLC);
b)Senden einer Groblokalisierungsanforderung durch die Lokalisierungsplattform (GMLC) an die Vermittlungsstelle (VMSC); und
c)Senden einer Groblokalisierung durch die Vermittlungsstelle (VMSC) an die Lokalisierungsplattform (GMLC), die die der Femtozelle entsprechenden Dienstzonen- (SAC) und Lokalisierungszonen-Codes (LAC) enthält;
wobei dieses Verfahren **dadurch gekennzeichnet ist, dass**:
- mindestens eine der Lokalisierungszonen (LA) spezifische zusätzliche Dienstzonen (SA*) enthält, in denen Femtozellen-Kennungen zusammengefasst sind; und:
- die Sequenz von Schritten außerdem die folgenden späteren Schritte enthält:
d)Bestimmung durch die Lokalisierungsplattform (GMLC), ob die Lokalisierungszone (LA) einer der spezifischen zusätzlichen Dienstzonen (SA*) entspricht oder nicht, in denen Femtozellen-Kennungen zusammengefasst sind;
e)wenn ja, Senden durch die Lokalisierungsplattform (GMLC) an die Femtozelle, über die Vermittlungsstelle (VMSC), einer FeinlokalisierungsAnforderungsmitteilung;
f)Erhalt durch die Vermittlungsstelle (VMSC) bei der Femtozelle einer Feinlokalisierung, die eindeutige Identifikationsdaten der der Femtozelle zugeordneten Box enthält; und
g)Übertragung durch die Vermittlungsstelle (VMSC) der Feinlokalisierung an die Speicherstelle der SMS (SMSC).

2. Verfahren nach Anspruch 1, wobei die Sequenz außerdem den folgenden Endschritt enthält:
h) durch die Speicherstelle der SMS (SMSC), Generieren eines Tickets von SMS-Daten (CDR) angereichert mit den eindeutigen Identifikationsdaten der Box.

3. Verfahren nach Anspruch 2, wobei der Schritt g) der Übertragung der Feinlokalisierung an die Speicherstelle der SMS (SMSC) durch die Vermittlungsstelle (VMSC) ein Schritt der indirekten Übertragung ist, der die folgenden Teilschritte enthält:
g1)Senden einer Antwort auf die Teilnehmerlokalisierungsanforderung, wobei diese Antwort die Feinlokalisierung enthält, durch die Vermittlungsstelle (VMSC) an die Lokalisierungsplattform (GMLC); und
g2)Übertragung einer Antwort auf die Teilnehmerlokalisierungsanforderung, wobei diese Antwort die Feinlokalisierung umfasst, durch die Lokalisierungsplattform (GMLC) an die Speicherstelle der SMS (SMSC).

4. Verfahren nach Anspruch 3, wobei die Antwort auf die Teilnehmerlokalisierungsanforderung eine Mitteilung *PSL*_*Ack* gemäß dem 3GPP-Spezifikationen ist.

5. Verfahren nach Anspruch 1, wobei die eindeutigen Identifikationsdaten der Box die der Box (@IP) zugeordnete IP-Adresse und einen geographischen Code (INSEE-Code) des Standorts der Box enthalten.

6. Verfahren nach Anspruch 1, wobei die Feinlokalisierungsanforderungsmitteilung eine Mitteilung *Location Reporting Control* gemäß den 3GPP-Spezifikationen und die Antwortmitteilung eine Mitteilung *Location Reporting* gemäß den 3GPP-Spezifikationen ist.

7. Verfahren nach Anspruch 6, wobei die eindeutigen Box-Identifikationsdaten in der Mitteilung *Location Reporting* dadurch eingekapselt werden, dass diese Daten die geographischen Längen-/Breitenkoordinaten ersetzen.

## Claims

1. A method for locating a short message SMS coming from a mobile user equipment (14; MS) in a communication network comprising:
- a mobile network (10) of a Mobile Network Operator (MNO) comprising:
• a core network with a switching centre (VMSC);
• a SMS storage centre (SMSC); and
• a location platform (GMLC), and
- a fixed network (18) of an Internet Access Provider (ISP), comprising a fixed core network and a plurality of individual boxes (20; BOX) forming terminal equipment devices of the fixed network, each having unique box identification data,
some of these boxes being provided with a short-range cellular emitter/receiver module of the femtocell type (30; FT) allowing a temporary wireless coupling (32) with a nearby mobile user equipment (14; MS),
method in which:
- the mobile network is organised into a plurality of location areas (LA) each identified by a location area code (LAC);
- each location area gathers a set of service areas (SA) each identified by a service area code (SAC), each service area gathering a geographically homogeneous set of cells of the mobile network;
- the femtocells operate in open mode, each femtocell of the mobile network being able to be coupled to any user equipment (MS) registered with the mobile network operator (MNO) and being nearby the femtocell, without this user equipment has been previously registered with the individual box; and
- the emission of an SMS from a user equipment (MS) coupled to a femtocell (FT) triggers a sequence comprising the following steps:
a) sending, by the SMS storage centre (SMSC) to the location platform (GMLC), of a user equipment location request;
b) sending, by the location platform (GMLC) to the switching centre (VMSC), of a rough location request; and
c) sending, by the switching centre (VMSC) to the location platform (GMLC), of a rough location comprising the service area (SAC) and location area (LAC) codes corresponding to the femtocell;
this method being **characterized in that**:
- at least one of the location areas (LA) comprises specific additional service areas (SA*) in which are gathered femtocell identifiers; and
- said sequence of steps further comprises the following subsequent steps:
d) determining, by the location platform (GMLC), whether the location area (LA) corresponds to one of said specific additional service areas (SA*) in which are gathered femtocell identifiers;
e) in the affirmative, sending, by the location platform (GMLC) to the femtocell, via the switching centre (VMSC), of a fine location request message;
f) obtaining, by the switching centre (VMSC) from the femtocell, of a fine location comprising unique data of identification of the box associated with the femtocell; and i) transmission, by the switching centre (VMSC), of the fine location to the SMS storage centre (SMSC).

2. The method of claim 1, wherein the sequence further comprises the following final step:
h) by the SMS storage centre (SMSC), generation of a SMS detail record (CDR) supplemented with the unique box identification data.

3. The method of claim 2, wherein said step g) of transmission, by the switching centre (VMSC), of the fine location to the SMS storage centre (SMSC), is a step of indirect transmission comprising the following sub-steps:
g1) sending, by the switching centre (VMSC) to the location platform (GMLC), of a response to said subscriber location request, this response incorporating said fine location; and
g2) transmission, by the location platform (GMLC) to the SMS storage centre (SMSC), of a response to said subscriber location request, this response incorporating said fine location.

4. The method of claim 3, wherein said response to the subscriber location request is a *PSL*_*Ack* message according to the 3GPP specifications.

5. The method of claim 1, wherein the unique box identification data comprise the IP address associated with the box (@IP) and a geographic code (INSEE Code) of the place of location of the box.

6. The method of claim 1, wherein the fine location request message is a Location Reporting Control message according to the 3GPP specifications and the response message is a Location Reporting message according to the 3GPP specifications.

7. The method of claim 6, wherein the unique box identification data are encapsulated in the Location Reporting message by replacement of the geographic longitude/latitude coordinates by such data.
